# EUROPÄISCHE PATENTSCHRIFT

(11) **EP 0 949 434 B1**
(45) Veröffentlichungstag und Bekanntmachung des Hinweises auf die Patenterteilung: **29.09.2004**
(21) Anmeldenummer: 99106516.0
(22) Anmeldetag: 30.03.1999
(51) Int. Cl.: F16H 25/18

(54) **Schraubgetriebe**
Screw transmission
Transmission à vis

(30) Priorität: 09.04.1998 DE 19815966
(43) Veröffentlichungstag der Anmeldung: 13.10.1999
(73) Patentinhaber: MAPAL Fabrik für Präzisionswerkzeuge Dr. Kress KG, D-73431 Aalen (DE)
(72) Erfinder: Jäger, Herbert, 74889 Sinsheim-Elsenz (DE)
(74) Vertreter: Gleiss, Alf-Olav, Dr.jur. Dipl.-Ing.

(56) Entgegenhaltungen:
- DE-A- 4 226 535

## Beschreibung

Die Erfindung betrifft ein Schraubgetriebe gemäß Oberbegriff des Anspruchs 1, bei dem die Hubbewegung einer Welle am Ausgang des Schraubgetriebes in eine Drehbewegung umgesetzt wird.

Es ist schon bekannt, eine Welle auf ihrer Außenfläche mit wenigstens einer Schraubenlinie zu versehen und die Welle in eine Hülse mit mindestens einem entsprechenden Mitnehmer einzusetzen. Die Welle wird mittels einer Nut oder eines Vierkants drehfest gelagert und kann lediglich axial bewegt werden. Die Hülse ist dagegen gegen eine axiale Verschiebung gesichert und rotiert bei axialer Bewegung der Welle um die Mittelachse. Das übertragbare Drehmoment hängt dabei im wesentlichen vom Durchmesser der Welle beziehungsweise der Hülse ab. Bei einem großen Durchmesser ist im allgemeinen das verfügbare Drehmoment ausreichend. Kritisch wird es jedoch, wenn der Durchmesser klein wird, dennoch ein größeres Drehmoment zur Verfügung gestellt werden muß; in manchen Fällen reicht das verfügbare Drehmoment nicht aus. Da bei kleineren Wellendurchmessern auch der Einfluß der Reibung immer größer wird, kann es zum Stillstand der Rotationsbewegung der Hülse und damit zu Funktionsstörungen kommen.

Aus DE 42 26 535 A ist ein gattungsgemäßes Schraubgetriebe mit einer Welle bekannt. Die Welle ist derart geführt, dass deren Hubbewegung am Ausgang des Schraubgetriebes in eine Drehbewegung umgesetzt wird. Die Welle weist eine Hubstange und einen Rundschieber auf, wobei die Hubstange und der Rundschieber axial zueinander ausgerichtet sind und an ihren einander zugeordneten Enden jeweils eine schraubenförmig ausgebildete und in Achsrichtung weisende Führungsfläche aufweisen, die spiegelbildlich aufeinander angepasst sind. Der Rundschieber weist ein axiales Widerlager auf, mit dem die Hubbewegung des Rundschiebers begrenzt und die Drehbewegung freigegeben wird. Hierbei hat sich herausgestellt, dass häufig das Verhältnis zwischen Drehwinkel des Rundschiebers und Hub der Hubstange ungünstig ist. Dies führt zu einer ungünstigen Handhabbarkeit des Schraubgetriebes.

Der Erfindung liegt daher die Aufgabe zugrunde, ein Schraubgetriebe zu schaffen, bei dem dieser Nachteil nicht auftritt.

Zur Lösung dieser Aufgabe wird ein Schraubgetriebe vorgeschlagen, das die in Anspruch 1 genannten Merkmale aufweist.

Das Schraubgetriebe zeichnet sich dadurch aus, daß die Nut oder Profilkante schraubenlinienförmig am Umfang der Hubstange angeordnet ist. Auf diese Weise ist es möglich, die axiale Verlagerung der Hubstange bei einem gegebenen Drehwinkel des Rundschiebers zu vergrößern, daß die Hubstange bei einer Axialverlagerung gleichzeitig gedreht wird, und damit die Drehbewegung des Rundschiebers unterstützt. An der Hubstange ist eine Nut oder eine Profilkante vorgesehen, mit der die Hubstange in vorwiegend axialer Richtung geführt wird. Diese Nut kann am Umfang der Hubstange in axialer Richtung verlaufen. Ebenso kann alternativ die Profilkante in axialer Richtung am Umfang der Hubstange vorgesehen sein. Insbesondere kann dabei die Hubstange als Vierkant mit einem rechteckförmigen Querschnitt oder dergleichen ausgebildet sein. Wird die Schraubenlinie im Drehsinn des Rundschiebers angeordnet, ergibt sich bei einem Hub der Hubstange ein wesentlich größerer Drehwinkel als wenn die Nut oder Profilkante achsparallel ist, da die Hubstange bei einem Hub gleichzeitig in Drehrichtung gedreht wird und dabei die Drehbewegung des Rundschiebers unterstützt.

Ferner zeigt das Schraubgetriebe den Vorteil, daß an einem Rundschieber am Ausgang des Schraubgetriebes ein wesentlich größeres Drehmoment abgreifbar ist, als dies bei dem bekannten Schraubgetriebe der Fall ist, da die Kraftübertragung von einer Hubstange auf den Rundschieber über langgezogene Führungsflächen erfolgt, die auch bei einem großen Hub der Hubstange über eine relativ große Kontaktfläche zwischen den Führungsflächen bildet. Besonders vorteilhaft ist, daß die Führungsflächen auch bei kleinem Wellendurchmesser relativ groß ausgebildet werden können und damit ein relativ großes Drehmoment übertragbar wird.

Als vorteilhaft wird auch angesehen, daß die Nut an der Hubstange im Bereich der Führungsfläche angeordnet ist. Dadurch kann die Bauform für die Hubstange relativ kurz sein, so daß das Schraubgetriebe insgesamt eine kompakte Bauform aufweist.

Ein weiteres Ausführungsbeispiel des Schraubgetriebes zeichnet sich dadurch aus, daß in der Hubstange und dem Rundschieber eine axiale Bohrung vorgesehen ist. Diese axiale Bohrung beeinflußt die Kraftübertragung relativ wenig. Andererseits kann in der Bohrung beispielsweise zur Stabilisierung der Anordnung eine Gleitstange eingeführt werden. Eine der Führung der Hubstange und des Rundschiebers dienende Hülse für das Schraubgetriebe ist dann nicht mehr erforderlich.

Alternativ ist es günstig, in der Bohrung eine Feder, beispielsweise eine Rückstellfeder anzuordnen, so daß bei einem oszillierenden Hub der Hubstange die Drehbewegung des Rundschiebers unterstützt wird.

Da das Schraubgetriebe sehr kompakt, beispielsweise als Patrone (Cartridge) ausgeführt werden kann, können in einem Werkzeug auch mehrere derartige Schraubgetriebe dicht nebeneinander angeordnet sein. Vorteilhaft ist es, Schraubgetriebe gegenläufig auszubilden. Ein entsprechender Zapfen vorzugsweise an den Drehscheiben zweier nebeneinander angeordneten Rundschieber kann auf einfache Weise den Drehwinkel begrenzen.

Da das Schraubgetriebe durch die kurze Bauform sehr kompakt ausgeführt ist, können vorteilhaft beliebige Antriebsquellen verwendet werden. Beispielsweise ist die Hubstange über eine Kolbenstange angetrieben oder direkt als Kolben ausgebildet, der von einem Druckzylinder angetrieben wird.

Als günstig wird auch angesehen, daß der Abtrieb für die Rotationsbewegung frei wählbar ist. Dadurch ist das Schraubgetriebe universell einsetzbar.

Weitere Ausgestaltungen ergeben sich aus den Unteransprüchen.

Die Erfindung wird im folgenden anhand von mehrere Ausführungsbeispiele wiedergebenden Zeichnungen näher erläutert. Es zeigen:
- Figur 1: ein erstes Ausführungsbeispiel mit einer drehfesten Hubstange und einem axial-festen Rundschieber,
- Figur 2: ein zweites Ausführungsbeispiel mit einer axialen Bohrung,
- Figur 3: zeigt ein drittes Ausführungsbeispiel, bei dem die Hubstange eine Nut aufweist, die schraubenlinienförmig am Umfang der Hubstange angeordnet ist,
- Figur 4: zeigt ein viertes Ausführungsbeispiel, bei dem die Hubstange im Querschnitt im wesentlichen rechteckförmig ausgebildet ist, die schraubenlinienförmig um die Mittelachse.gewunden ist,
- Figur 5: zeigt das vierte Ausführungsbeispiel im Querschnitt mit einem Führungselement,
- Figur 6: zeigt ein fünftes Ausführungsbeispiel im Querschnitt, bei dem das Führungselement als Stift mit Linienkontakt ausgebildet ist,
- Figur 7: zeigt ein sechstes Ausführungsbeispiel mit zwei gegenläufigen Rundschiebern, deren Drehwinkel durch Zapfen begrenzt werden und
- Figur 8: zeigt ein siebtes Ausführungsbeispiel im Querschnitt mit einer Feder in der zentralen Bohrung.

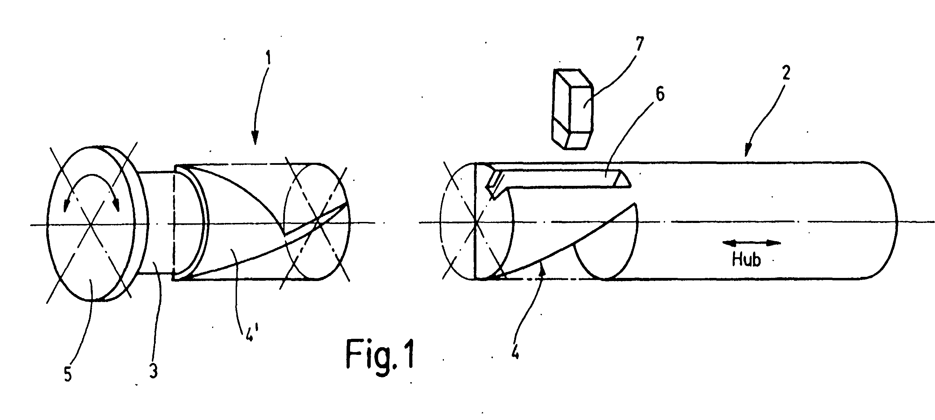

In einem ersten Ausführungsbeispiel, welches nicht die Erfindung beschreibt, aber zum besseren Verständnis dargestellt ist, ist gemäß Figur 1 ein Schraubgetriebe mit einem Rundschieber 1 und einer Hubstange 2 in Explosionsdarstellung wiedergegeben. Die Hubstange 2 ist als zylindrische Welle ausgebildet, bei der am linken Ende mittels eines schraubenförmigen Einschnitts etwa parallel zur Längsachse eine Führungsfläche 4 ausgebildet ist. Die in axialer Richtung der Hubstange 2 gemessene Länge der Führungsfläche 4 ist unter Berücksichtigung des Hubs der Hubstange 2 und des vom Rundschieber 1 erwünschten Drehwinkels bestimmt. Im Bereich der Führungsfläche 4 ist in Längsrichtung eine Führungsnut 6 eingebracht, in die ein schematisch dargestelltes feststehendes Führungselement 7 eingreift, mit dem die Hubbewegung der Hubstange 2 vorgegeben wird. Anstelle der Führungsnut 6 und dem Führungselement 7 kann jede andere geeignete Konstruktion, beispielsweise eine Profilkante oder eine Welle mit einem Vieleck als Querschnittsfläche verwendet werden. Auch können die Führungsnut 6 und das Führungselement 7 in axialer Richtung verlagert und in einem Abstand zur Führungsfläche 4 angeordnet sein.

Der Rundschieber 1 weist einen zylindrischen Grundkörper auf, der um die Mittelachse drehbar ist. An seinem linken Ende ist eine Drehscheibe 5 vorgesehen, über die ein Drehmoment abgreifbar ist. In Figur 1 ist rechts von dem Drehteller 5 eine Einkerbung 3 im Grundkörper vorgesehen, in die ein axiales Widerlager eingreift, um eine axiale Verschiebung des Rundschiebers 1 zu verhindern. Andererseits ist das axiale Widerlager so ausgebildet, daß es die Drehbewegung des Rundschiebers 1 beziehungsweise der Drehscheibe 5 freigibt. Im Bereich des rechten Endes des Rundschiebers 1 ist etwa spiegelsymmetrisch zur Führungsfläche 4 der Hubstange 2 eine weitere Führungsfläche 4' angeordnet. Beide Führungsflächen 4, 4' überlappen sich je nach Stellung der Hubstange 2 während des Betriebes mehr oder weniger und bilden eine gemeinsame Kontaktfläche, über die Kraft von der Hubstange 2 auf den Rundschieber 1 übertragen wird.

Vollständigkeitshalber wird noch darauf hingewiesen, daß der Rundschieber 1 und die Hubstange 2 in zusammengesetzten Zustand in eine Hülse oder eine entsprechende Führungs-Bohrung eingesetzt werden, um radiale Kräfte aufzufangen. Die Hülse beziehurigsweise die Bohrung wurden aus Übersichtlichkeitsgründen nicht dargestellt.

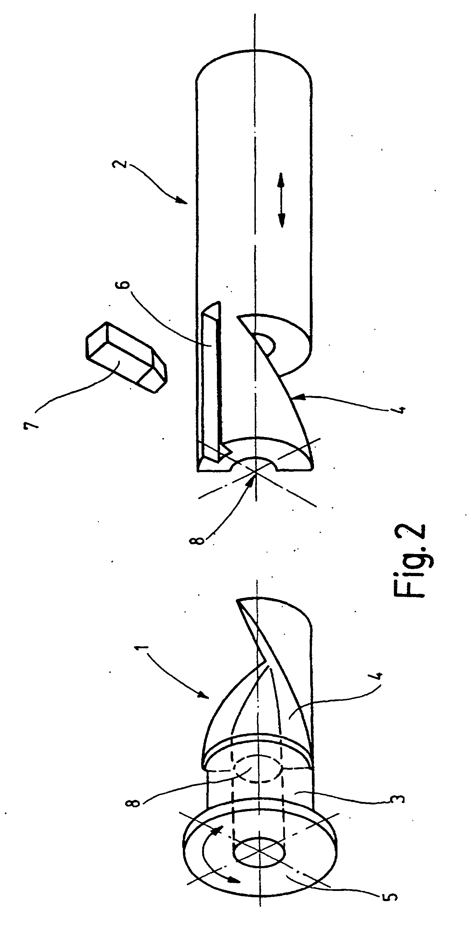

Figur 2 zeigt ein zweites Ausführungsbeispiel des Schraubgetriebes, welches nicht Gegenstand der Erfindung ist, aber dem besseren Verständnis dient.

Es umfaßt ebenfalls eine Hubstange 2 und einen Rundschieber 1, wie sie anhand von Figur 1 bereits näher beschrieben wurden. Figur 2 läßt erkennen, daß die Hubstange 2 und der Rundschieber 1 mit einer konzentrisch zur Mittelachse verlaufenden Bohrung 8 versehen sind. In der zentralen Bohrung 8 ist beispielsweise eine Achse (in der Figur nicht dargestellt) zur Stabilisierung des Schraubgetriebes und zur Führung der Hubstange 2 und des Rundschiebers 1 einsetzbar. Durch die zentrale Bohrung 8 wird die Kraftübertragung auf den Rundschieber nur unwesentlich beeinflußt, da die Flächenbelastung auf der wirksamen Kontaktfläche der beiden Führungsflächen 4 außen größer ist als in Achsnähe. Eine Hülse ist nicht erforderlich, da die Achse genügend Stabilität und Führung für die Anordnung bietet.

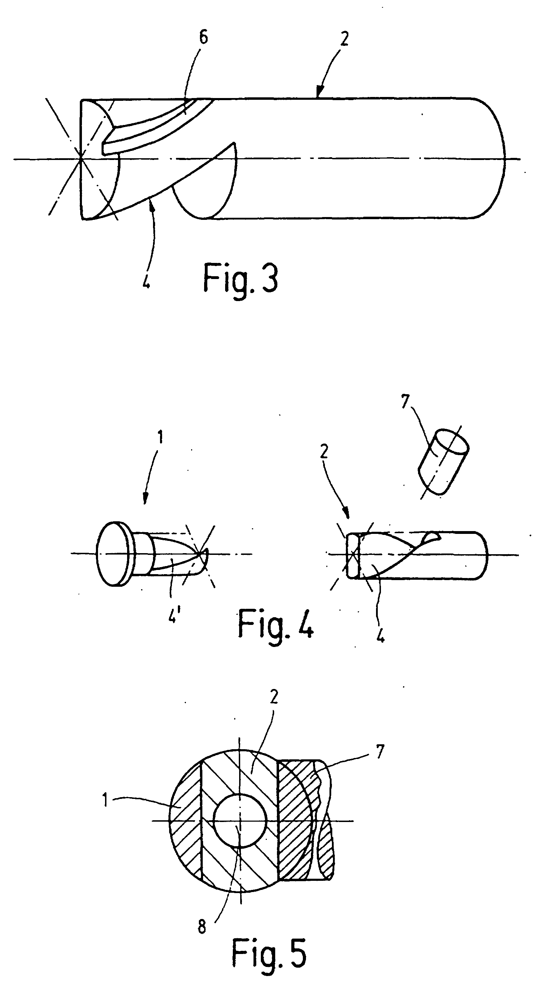

Figur 3 zeigt ein drittes Ausführungsbeispiel, bei dem am Umfang der Hubstange 2 eine schraubenlinienförmige Nut 6 angebracht ist. Diese Nut 6 bewirkt, daß die Hubstange 2 sich während des Hubs entsprechend der Schraubenlinienform der Nut 6 zusätzlich um die Mittelachse dreht. Durch diese zusätzliche Drehung wird auch der Rundschieber 1 zusätzlich gedreht, so daß insgesamt die Drehscheibe 5 des Rundschiebers 1 einen größeren Drehwinkel zurücklegt als wenn die Führungsnut 6 axparallel ausgebildet ist. Der Drehwinkel ist dabei abhängig von der Steigung der Schraubenlinie der Führungsnut 6. Bei geeigneter Steigung kann beispielsweise eine Verdopplung oder größere Drehwinkel des Drehschiebers 1 erreicht werden. Die schraubenlinienförmige Führungsnut 6 ist sowohl für das Ausführungsbeispiel nach Figur 1 als auch für das nach Figur 2 anwendbar. Entsprechend sind die zu Figur 1 genannten alternativen Führungselemente wie Profilkanten etc. verwendbar.

Figur 4 zeigt ein viertes Ausführungsbeispiel für ein kleines Schraubgetriebe beispielsweise in natürlicher Größe. Anstelle der Führungsnut 6 ist die Hubstange 2 mit einer im wesentlichen rechteckförmigen Querschnittsfläche ausgebildet, an deren Außenseite das Führungselement 7 gleitet. Auf der Innenseite ist die Führungsfläche 4 erkennbar, auf der die entsprechende Führungsfläche 4' des Rundschiebers 1 gleitet.

Figur 5 zeigt im Querschnitt nochmal die Anordnung gemäß Figur 4. Im mittleren Bereich der Figur 5 ist die Hubstange 2 erkennbar, die hier beispielhaft mit einer zentralen Bohrung 8 versehen ist. An der linken Seite von Figur 5 ist ein Teil des Rundschiebers 1 erkennbar, dessen Gleitfläche an der Gleitfläche der Hubstange 2 anliegt. Auf der rechten Seite von Figur 5 ist das Führungselement 7 erkennbar, das auf der anderen Seite der Gleitfläche anliegt. Die rechteckförmige Querschnittfläche der Hubstange 2 ist dabei ebenfalls schraubenlinienförmig ausgebildet, was in Figur 4 besser erkennbar ist.

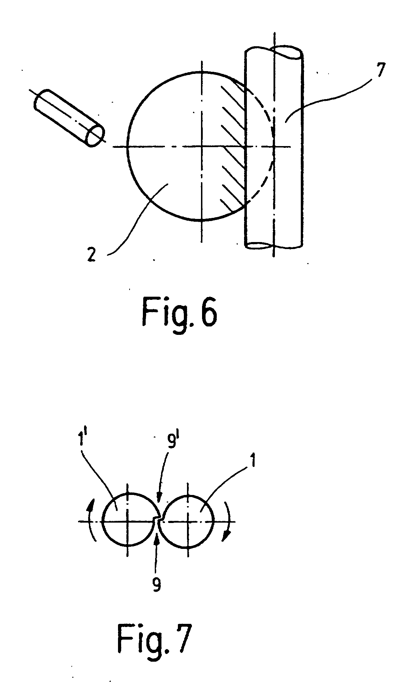

Figur 6 zeigt ein fünftes Ausführungsbeispiel im Querschnitt, bei dem das Führungselement 7 als Stift mit Linienkontakt ausgebildet ist. Der Stift verläuft versetzt, vorzugsweise quer zur Mittelachse der Hubstange 2. Er berührt die Hubstange 2 im Bereich einer Abflachung, so daß eine Drehung der Hubstange 2 um ihre Mittelachse -wie bei dem Ausführungsbeispiel gemäß Figur 1- sicher vermieden wird. Ein derartiges Schraubgetriebe ist komplett als Patrone oder Cartridge ausführbar und beispielsweise als Mehrfachschraubgetriebe in einem Werkzeug einsetzbar.

Figur 7 zeigt ein sechstes Ausführungsbeispiel eines Schraubgetriebes mit zwei nebeneinander angeordneten Schraubgetrieben, bei denen die Drehrichtung -wie durch die entgegengesetzten Pfeile angedeutet- gegenläufig ist. Dargestellt sind im Querschnitt zwei Rundschieber 1 und 1', wobei jeder Rundschieber einen Zapfen 9, 9' aufweist. Die beiden Zapfen sind dabei so ausgebildet, daß sie bei einem gegenläufigen Umlauf der beiden Rundschieber 1, 1' gegeneinanderschlagen und somit deren Drehwitikel begrenzen.

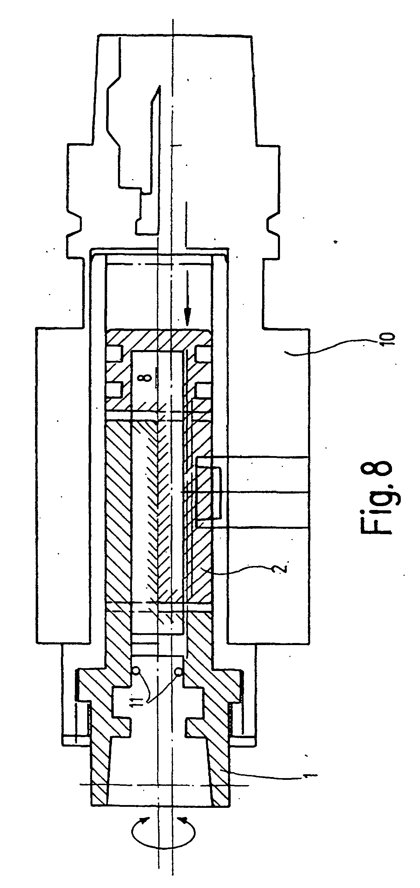

Figur 8 zeigt ein siebtes Ausführungsbeispiel eines Schraubgetriebes im Längsschnitt, bei dem die Hubstange 2 und der Rundschieber 1 in eine Hülse 10 eingesetzt sind. Anstelle der Hülse ist auch eine entsprechende Bohrung beispielsweise in einem Werkzeug vorsehbar. Des weiteren ist die zentrale Bohrung 8 erkennbar, in die eine Feder 11 eingesetzt ist. Die Feder 11 ist dabei als Rückstellfeder ausgebildet und unterstützt die alternierende Drehbewegung des Rundschiebers 1. Andererseits dient die Feder 11 auch zur Zusammenhaltung der beiden Teile Hubstange 2 und Rundschieber 1.

Das Schraubgetriebe ist universell ausgebildet, so daß es für unterschiedliche Anwendungen und Antriebsarten einsetzbar ist. Beispielsweise ist die Hubstange 2 entweder als Kolben in einen Druckzylinder ausgebildet. In alternativer Ausgestaltung des Schraubgetriebes ist vorgesehen, die Hubstange 2 mittels einer weiteren Stange an einem Kolben zentrisch oder exzentrisch zu befestigen und mit dem Kolben anzutreiben. Auf diese Weise gelingt es, mehrere Rundschieber in einem einzigen Werkzeug auf engstem Raum anzuordnen und mechanisch anzutreiben. Da auch der Rundschieber 1 mit seiner Drehscheibe 5 für eine universelle Nutzung ausgelegt ist, ergibt sich vorteilhaft ein vielseitig verwendbares Schraubgetriebe.

## Patentansprüche

1. Schraubgetriebe mit einer Welle, die derart geführt ist, dass deren Hubbewegung am Ausgang des Schraubgetriebes in eine Drehbewegung umgesetzt wird, und die eine Hubstange (2) mit einer Nut (6) und einer Profilkante und einen Rundschieber (1) aufweist, wobei die Hubstange (2) und der Rundschieber (1) axial zueinander ausgerichtet sind, an ihrer einander angeordneten Enden eine jeweils schraubenförmig ausgebildete und in Achsrichtung weisende Führungsfläche (4) aufweisen, die spiegelbildlich aufeinander angepasst sind, wobei der Rundschieber (1) ein axiales Widerlager (3) aufweist, mit dem die Hubbewegung des Rundschiebers (1) begrenzt und die Drehbewegung freigegeben wird, **dadurch gekennzeichnet, dass** die Nut (6) oder Profilkante schraubenförmig am Umfang der Hubstange (2) angeordnet ist.

2. Schraubgetriebe mit einer Welle nach Anspruch 1, **gekennzeichnet durch** eine der Führung der Hubstange (2) und des Rundschiebers (1) dienende Hülse (10).

3. Schraubgetriebe nach einem der vorhergehenden Ansprüche, **dadurch gekennzeichnet, dass** die Nut (6) oder Profilkante im Bereich der Führungsfläche (4) der Hubstange (2) angeordnet ist.

4. Schraubgetriebe nach einem der vorhergehenden Ansprüche, **dadurch gekennzeichnet, dass** die Hubstange (2) und der Rundschieber (1) eine axiale Bohrung (8) aufweisen.

5. Schraubgetriebe nach Anspruch 4, **dadurch gekennzeichnet, dass** in der zentralen Bohrung (8) eine Führungsstange angeordnet ist.

6. Schraubgetriebe nach Anspruch 4 oder 5, **dadurch gekennzeichnet, dass** in der zentralen Bohrung (8) eine Feder, vorzugsweise eine Rückstellfeder (11), angeordnet ist.

7. Schraubgetriebe nach einem der vorhergehenden Ansprüche, **dadurch gekennzeichnet, dass** die Hubstange (2) als Kolben eines Druckzylinders ausgebildet ist.

8. Schraubgetriebe nach einem der Ansprüche 1 bis 7, **dadurch gekennzeichnet, dass** eine Stange vorgesehen ist, mit der die Hubstange (2) des Schraubgetriebes antreibbar ist.

9. Schraubgetriebeanordnung mit Schraubgetriebe nach einem der vorhergehenden Ansprüche, **dadurch gekennzeichnet, dass** wenigstens zwei Schraubgetriebe achsparallel in einem Gehäuse angeordnet sind.

10. Schraubgetriebeanordnung nach Anspruch 9, **dadurch gekennzeichnet, dass** von zwei benachbarten Schraubgetrieben die Drehrichtung gegenläufig ist.

11. Schraubgetriebeanordnung nach Anspruch 9 oder 10, **dadurch gekennzeichnet, dass** die Rundschieber (1,1') einen Zapfen (9,9') aufweisen, der den Drehwinkel der beiden Rundschieber (1,1') durch gegenseitigen Anschlag begrenzt.

## Claims

1. A screw transmission including a shaft to be guided so that the reciprocating movement of the shaft is converted into rotary movement around an axis at the output of the screw transmission, and which has a reciprocating rod (2) with a groove (6) and a profiled edge, and a routable slide (1) whereupon the reciprocating rod (2) and the routable slide (1) are running axially towards one another, at their corresponding ends they have a helically shaped guide surface (4) which runs in the axial direction, mirror fashion overlapping each other, whereupon the routable slide (1) has an axial abutment (3) whereby the reciprocating movement of the routable slide (1) is limited and permits rotary movement, **characterized in that** the groove (6) or the profiled edge is arranged in the form of a helix onto the circumference of the reciprocating rod (2).

2. A screw transmission including a shaft according to claim 1, **characterized in that** there is a sleeve (10) used to guide the reciprocating rod (2) and the routable slide (1).

3. A screw transmission according to one of the preceding claims, **characterized in that** the groove (6) or the profiled edge is arranged in the region of the guide surface (4) of the reciprocating rod (2).

4. A screw transmission according to one of the preceding claims, **characterized in that** an axial bore (8) is provided in the reciprocating rod (2) and the routable slide (1).

5. A screw transmission according to claim 4, **characterized in that** a guiding rod is inserted into the axial bore (8).

6. A screw transmission according to claim 4 or 5, **characterized in that** into the axial bore (8) is arranged a spring, preferably a return spring (11).

7. A screw transmission according to one of the preceding claims, **characterized in that** the reciprocating rod (2) is constructed as a piston, which is driven by pressure cylinder.

8. A screw transmission according to one of the claims 1 to 7, **characterized in that** the reciprocating rod (2) of the screw transmission is driven via a piston rod.

9. A screw transmission arrangement with screw transmission according to one of the preceding claims, **characterized in that** in a tool there are arranged at least two screw transmissions axially parallel next to each other.

10. A screw transmission arrangement according to claim 9, **characterized in that** two screw transmissions which are arranged next to one another have opposite directions of rotation.

11. A screw transmission arrangement according to claim 9 or 10, **characterized in that** each routable slide (1, 1') has a respective pin (9, 9') thus constructed that they strike against one another during opposing revolutions of the two routable slides (1, 1') to limit thereby their angle of rotation.

## Revendications

1. Mécanisme à vis incluant un arbre qui est guidé de sorte que son mouvement de levage à la sortie du mécanisme à vis soit transformé dans un mouvement de rotation et qui présente une tige à mouvement de levage (2) avec une cannelure (6) et un chant profilé et un tiroir rond (1), où la tige à mouvement de levage (2) et le tiroir rond (1) sont dirigées dans la direction axiale l'une vers l'autre, à leurs extrémités disposées l'une vers l'autre présentent chacune à raison d'une surface de guidage (4) en spirale et orientée dans la direction de l'axe qui s'arrangent symétriquement en miroir l'une sur l'autre, où le tiroir rond (1) présente une pièce d'appui axiale (3) avec laquelle on limite le mouvement de levage du tiroir rond (1) et on permet le mouvement de rotation, **caractérisé en ce que**, la cannelure (6) où le chant profilé est disposée en spirale sur la circonférence de la tige à mouvement de levage (2).

2. Mécanisme à vis avec un arbre selon la revendication 1, **caractérisé par**, une douille (10) qui sert pour le guidage de la tige à mouvement de levage (2) et du tiroir rond (1).

3. Mécanisme à vis selon l'une des revendications précédentes **caractérisé en ce que**, la cannelure (6) ou le chant profilé est disposée dans la zone de la surface de guidage (4) de la tige à mouvement de levage (2).

4. Mécanisme à vis selon l'une des revendications précédentes **caractérisé en ce que**, la tige à mouvement de levage (2) et le tiroir rond (1) présentent un trou axial (8).

5. Mécanisme à vis selon la revendication 4 **caractérisé en ce que**, dans le forage central (8) est disposée une tige de guidage.

6. Mécanisme à vis selon la revendication 4 ou 5 **caractérisé en ce que**, dans le forage central (8) est disposée un ressort, de préférence un ressort de rappel (11).

7. Mécanisme à vis selon l'une des revendications précédentes **caractérisé en ce que**, la tige à mouvement de levage (2) est formée comme piston d'un cylindre de pression.

8. Mécanisme à vis selon l'une des revendications 1 à 7 **caractérisé en ce qu'**on prévoit une tige par laquelle peut être entraînée la tige à mouvement de levage (2) du mécanisme à vis.

9. Arrangement du mécanisme à vis avec un mécanisme à vis selon l'une des revendications précédentes, **caractérisé en ce que** au moins deux mécanismes à vis, dont les axes sont parallèles, sont disposés dans une carcasse.

10. Arrangement du mécanisme à vis selon la revendication 9, **caractérisé en ce que**, les sens de rotation des deux mécanismes à vis voisins sont contraires.

11. Arrangement du mécanisme à vis selon la revendication 9 ou 10, **caractérisé en ce que**, les tiroirs ronds (1, 1') sont prévues chacune avec une goupille (9, 9') qui par choc réciproque limitent l'angle de rotation des deux tiroirs ronds (1, 1').
